# EUROPÄISCHE PATENTANMELDUNG

(11) **EP 1 401 075 A2**
(43) Veröffentlichungstag der Anmeldung: **24.03.2004**
(21) Anmeldenummer: 03020282.4
(22) Anmeldetag: 08.09.2003
(51) Int. Cl.: H02H 3/33, H02H 1/04

(54) **Netzüberspannungsschutz**

(30) Priorität: 20.09.2002 DE 10243858
(71) Anmelder: SIEMENS AKTIENGESELLSCHAFT, 80333 München (DE)
(72) Erfinder: Bauer, Bernhard, 93080 Pentling (DE)

(57) **Zusammenfassung**

Bei einem ertüchtigten Netzüberspannungsschutz (11) ist ein erster Komparator (16) vorgesehen, der eine interne Signalspannung (U_{S}) ausgibt, wenn die Netzspannung (U_{N}) einen zulässigen Grenzwert überschreitet, weiterhin eine dem ersten Komparator (16) nachgeschaltete Zeitverzögerungsschaltung (17), die eine modifizierte Signalspannung (U'_{S}) ausgibt, sowie ein zweiter Komparator (18), der zur Erzeugung des Auslösesignals eine Auslösespannung (U_{A}) ausgibt, wenn die modifizierte Signalspannung (U'_{S}) einen Referenzwert (U₂) überschreitet.

## Beschreibung

Die Erfindung bezieht sich auf einen Netzüberspannungsschutz mit einem zum Anschluss an eine spannungsführende Netzleitung vorgesehenen Spannungseingang und mit einem Spannungsausgang zur Ausgabe eines Auslösesignals an eine die Netzleitung schaltende Auslösevorrichtung.

Ein solcher Netzüberspannungsschutz ist beispielsweise als Teil eines Schutzschaltgerätes vorgesehen. Ein Schutzschaltgerät ist üblicherweise in einem Stromnetz zwischen einen Verbraucher und ein Hauptnetz geschaltet, um den Verbraucher bei einer Fehlfunktion schnell und sicher vom Hauptnetz zu trennen. Die Fehlfunktion kann einerseits verbraucherseitig verursacht sein, beispielsweise durch einen einen Überstrom in der Netzleitung erzeugenden Kurzschluss. Eine weitere verbraucherseitige Fehlfunktion tritt auf, wenn ein so genannter Fehler- oder Differenzstrom aus der Netzleitung, z.B. über eine die Netzleitung berührende Person, gegen Erde abfließt. Zum Schutz vor den erwähnten verbraucherseitig verursachten Fehlfunktionen werden Leitungsschutzschalter bzw. Fehleroder Differenzstromschutzschalter eingesetzt. Der Aufbau von Fehler- oder Differenzstromschutzschaltern ist beispielsweise aus der "etz" (1986), Heft 20, S. 938-945, bekannt.

Eine hauptnetzseitig verursachte Fehlfunktion tritt beispielsweise dann auf, wenn eine zeitliche Schwankung in der Netzspannung auftritt. Dies kann insbesondere dann zu einer Beschädigung des Verbrauchers führen, wenn die Netzspannung einen zulässigen Grenzwert überschreitet, d.h. wenn eine Netzüberspannung auftritt. Ein Netzüberspannungsschutz dient dazu, das Schutzschaltgerät bei einer gefährlichen Netzüberspannung auszulösen. Hingegen soll bei einer transienten Netzüberspannung, also einer Netzüberspannung, die aufgrund kurzer Dauer und vereinzelten Auftretens keine Gefahr für den Verbraucher darstellt, die Verbraucherseite nicht vom Leiternetz getrennt werden, um einen unnötigen Betriebsausfall des Verbrauchers und einen evtl. dadurch verursachten Schaden zu vermeiden.

Ein Netzüberspannungsschutz muss also fehlauslösungsfest im Hinblick auf eine transiente Netzüberspannung sein, wobei gleichzeitig die Auslösezeit bei einer gefährlichen Netzüberspannung möglichst kurz zu sein hat. Außerdem soll die Toleranz, innerhalb derer der Überspannungsschutz auf eine Überschreitung des zulässigen Grenzwertes durch die Netzspannung reagiert, möglichst klein sein. Mit anderen Worten hat die Auslösung möglichst präzise und reproduzierbar bei Überschreitung des Grenzwertes anzusprechen.

Der Erfindung liegt die Aufgabe zugrunde, einen im Hinblick auf diese Anforderungen ertüchtigten Netzüberspannungsschutz anzugeben.

Diese Aufgabe wird erfindungsgemäß gelöst durch die Merkmale des Patentanspruchs 1. Danach ist zwischen einem an eine spannungsführende Netzleitung anzuschließenden Spannungseingang und einem zur Ausgabe eines Auslösesignals vorgesehenen Spannungsausgang ein erster Komparator vorgesehen, der eine interne Signalspannung ausgibt, wenn die Netzspannung einen zulässigen Grenzwert überschreitet. Weiterhin ist eine dem ersten Komparator nachgeschaltete Zeitverzögerungsschaltung vorgesehen, die die interne Signalspannung modifiziert, insbesondere zeitverzögert. Die modifizierte Signalspannung wird einem zweiten Komparator zugeleitet, der zur Erzeugung des Auslösesignals eine Auslösespannung ausgibt, sobald die modifizierte Signalspannung einen Referenzwert überschreitet.

Ein Komparator wird üblicherweise durch geeignete Beschaltung eines handelsüblichen Operationsverstärkers realisiert. Eine solche Beschaltung ist beispielsweise in U. Tietze/ Ch.

Schenk: "Halbleiter-Schaltungstechnik", S. 178ff, 6. Aufl., Berlin (Springer), 1983 beschrieben.

Durch die beiden Komparatoren und die zwischen diese geschaltete Zeitverzögerungsschaltung wird erreicht, dass eine auftretende Netzüberspannung nur dann zu einer Ausgabe des Auslösesignals führt, wenn die Netzüberspannung mindestens während einer vorgegebenen Zeitspanne andauert. Aufgrund der kurzen Ansprechzeiten und der kleinen Ansprechtoleranz eines Komparators ist sowohl der Beginn der Netzüberspannung als auch der Auslösezeitpunkt sehr präzise festgelegt. Auf diese Weise wird zum einen die Gefahr einer Fehlauslösung bei einer transienten Netzüberspannung reduziert. Zum anderen wird eine besonders kurze Abschaltzeit erreicht, sobald eine Netzüberspannung die ungefährliche Zeitspanne überschreitet.

In vorteilhafter Ausführung weist die Zeitverzögerungsschaltung eine definierte Ladezeitkonstante und eine definierte Entladezeitkonstante auf, wobei die Entladezeitkonstante die Ladezeitkonstante um ein Mehrfaches überschreitet. Als Ladezeitkonstante ist in Analogie zu der bei RC-Gliedern üblichen Terminologie diejenige Zeitspanne ab Einschalten der Signalspannung bezeichnet, nach welcher die modifizierte Signalspannung sich auf mehr als einen Bruchteil 1/e (ca. 0,37) der Signalspannung an diese angenähert hat. Entsprechend wird als Entladezeitkonstante diejenige Zeitspanne ab Beginn der Entladung verstanden, nach der die modifizierte Signalspannung auf weniger als einen Bruchteil 1/e des Ausgangswertes zu Beginn der Entladung abgefallen ist.

Vorzugsweise ist die Zeitverzögerungsschaltung preisgünstig und zuverlässig mit einem RC-Glied realisiert. Ein solches beinhaltet einen über Widerstände be- und entladbaren Kondensator. Die Ladezeitkonstante eines RC-Gliedes ist gegeben durch das Produkt des Ladewiderstandes und der Kapazität des Kondensators. Die Entladezeitkonstante ist durch das Produkt des Entladewiderstandes und der Kapazität des Kondensators gegeben. Durch die Überdimensionierung der Entladezeitkonstante im Vergleich zur Ladezeitkonstante wird erreicht, dass sich die Wirkung kurzzeitig hintereinander folgender Überspannungsstöße aufkumuliert, da die Zeitverzögerungsschaltung nach jedem Überspannungsstoß für eine gewisse Zeit in "vorgespanntem" Zustand verbleibt. Als besonders vorteilhaft erweist sich hier ein Verhältnis von Entlade- zu Ladezeitkonstante von ≥ 10.

Bevorzugt ist zumindest der erste Komparator mit einer Schalthysterese ausgestattet. Auf diese Weise wird ein unkontrolliertes Hin- und Herschalten des Überspannungsschutzes bei einem langsamen Aufbau der Netzüberspannung wirksam vermieden. Eine weitere Stabilisierung des Betriebsverhaltens wird dadurch erreicht, dass beide Komparatoren mit einer Schalthysterese ausgestattet sind.

Zweckmäßigerweise ist dem ersten Komparator eine Signalaufbereitungsschaltung vorgeschaltet, die einen Gleichrichter und/oder einen Spannungsreduzierter beinhaltet. Durch den Gleichrichter werden im Vergleich zum Massenpotential negative Eingangssignale vermieden, die zu unzulässigen Betriebszuständen des Komparators führen können. In besonders einfacher Bauweise ist der Gleichrichter durch eine Diode realisiert. Durch den Spannungsreduzierer wird die Netzspannung vorteilhafterweise auf eine leicht zu handhabende Niederspannung reduziert, die als Maß für die Netzspannung herangezogen wird. In einer besonders kostengünstigen Form ist der Spannungsreduzierer dabei als einfacher, aus Widerständen aufgebauter Spannungsteiler ausgeführt.

Die mit der Erfindung erzielten Vorteile bestehen insbesondere darin, dass eine hohe Fehlerauslösungsfestigkeit bei transienten Netzüberspannungen mit einem zuverlässigen und schnellen Abschaltverhalten kombiniert sind. Ein entscheidender Vorteil ist, dass eine transiente Netzüberspannung bei Verwendung eines RC-Gliedes als Zeitverzögerungsschaltung immer auf einen vollkommen entladenen Kondensator trifft, auch dann, wenn die Netzspannung bereits vor Eintreten der transienten Netzüberspannung schon sehr nahe am zulässigen Grenzwert lag. Dies wäre z.B. nicht der Fall, wenn ein RC-Glied unter Umgehung des ersten Komparators direkt mit der Signalaufbereitungsschaltung verbunden würde. In diesem Fall wäre das RC-Glied schon vor Erreichen der Netzüberspannung in einem "vorgespannten" Zustand und auch eine unbedeutende Netzüberspannung könnte zu einer Fehlauslösung führen. Ebenso ist die Auslösezeit vorteilhafterweise nahezu unabhängig davon, ob die Netzüberspannung bei eingeschaltetem Gerät eintritt, oder ob das Gerät bei bereits bestehender Netzüberspannung eingeschaltet wird. Von großem Vorteil ist weiterhin, dass das Auslöseverhalten weitgehend unabhängig von der Grundfrequenz der Netzspannung ist und somit auch robust auf Schwankungen der Netzfrequenz reagiert. Der Netzüberspannungsschutz ist zudem kostengünstig herzustellen und zeichnet sich aufgrund der verwendeten Halbleiterbauelemente durch einen sehr geringen Stromverbrauch aus.

Durch seine kompakte Bauweise ist der Netzüberspannungsschutz insbesondere gut geeignet als Zusatzfunktion eines Leitungsschutzschalters, Fehlerstromschutzschalters oder Differenzstromschutzschalters.

Nachfolgend wird ein Ausführungsbeispiel der Erfindung anhand einer Zeichnung näher erläutert. Darin zeigen:
- FIG 1: schematisch einen Differenzstrom(DI)-Schutzschalter mit einem Netzüberspannungsschutz, und
- FIG 2: ein elektronisches Schaltbild des Netzüberspannungsschutzes gemäß FIG 1.

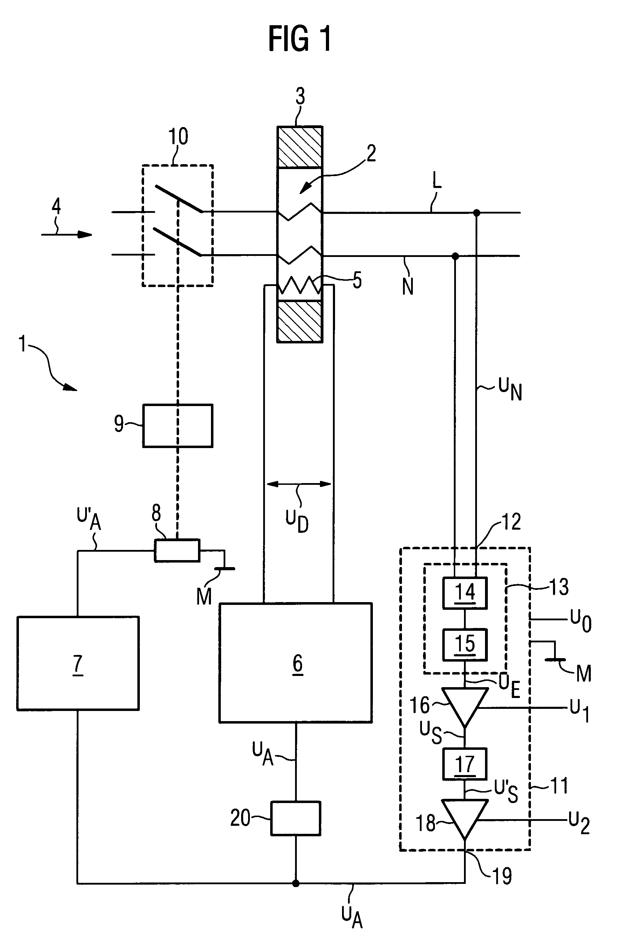

In FIG 1 ist ein Schutzschalter 1 abgebildet, der in seiner Grundfunktion als Differenzstrom(DI)-Schutzschalter ausgebildet ist. Dazu umfasst der Schutzschalter 1 einen Summenstromwandler 2 mit einem magnetischen Wandlerkern 3, durch den die Leitungen eines Leiternetzes geführt sind. Das Leiternetz umfasst einen Nullleiter N sowie eine spannungsführende Phasenleitung L. Eventuell vorhandene weitere Phasenleitungen sind der Einfachheit halber in FIG 1 nicht dargestellt. Der Schutzschalter 1 ist dabei einem (nicht dargestellten) elektrischen Verbraucher vorgeschaltet, welcher entlang der Einspeiserichtung 4 aus dem Leiternetz mit Strom versorgt wird.

Der Wandlerkern 3 ist des Weiteren mit einer Sekundärspule 5 umwickelt. Im störungsfreien Betrieb des Leiternetzes L,N ist die vektorielle Summe der durch den Wandlerkern 3 fließenden Ströme stets null. Ein Fehler-/Differenzstrom tritt dann auf, wenn ein Teil des zugeführten Stromes verbraucherseitig über Erde abgeführt wird. In diesem Fall ergibt die vektorielle Summe der durch den Wandlerkern 3 fließenden Ströme einen von null verschiedenen Betrag. Dieser Fehler-/Differenzstrom induziert in der Sekundärspule 5 eine Differenzspannung U_{D}, welche als Maß für den aufgetretenen Differenzstrom herangezogen wird. Die Differenzspannung U_{D} wird von einem Fehler-/ Differenzstromanalysator 6 verstärkt und analysiert. Bei einem DI-Schutzschalter wird der Differenzstromanalysator 6 wird dabei auf nicht näher dargestellte Weise aus einem Netzteil mit einer Betriebsspannung U₀, z.B. gegen Masse M, versorgt. Bei Vorliegen eines hinsichtlich seines Betrags und seiner Dauer gefährlichen Differenzstroms gibt der Fehler-/Differenzstromanalysator 6 ein Auslösesignal in Form einer Auslösespannung U_{A} an die optional vorhandene Ansteuerschaltung 7 eines Auslösers 8 ab. Der Auslöser 8, der bevorzugt in Form eines Relais oder Haltemagnetsystems realisiert ist, betätigt ein mechanisches Schaltschloss 9, welches die Kontakte eines auf die Leitungen L,N des Leiternetzes wirkenden Kontaktsystems 10 öffnet. Die von der Ansteuerschaltung 7 an den Auslöser 8 abgegebene modifizierte Auslösespannung U'_{A} wird dabei über den Auslöser 8 an Masse M abgeführt.

Als Zusatzfunktion beinhaltet der Schutzschalter 1 einen Netzüberspannungsschutz 11. Der Netzüberspannungsschutz 11 weist einen Spannungseingang 12 auf, der mit der Phasenleitung L und dem Neutralleiters N elektrisch leitend verbunden ist. Die Netzspannung U_{N} wird aus der Phasenleitung L über den Spannungseingang 12 zunächst einer Signalaufbereitungsschaltung 13 zugeführt. Innerhalb der Signalaufbereitungsschaltung 13 ist ein Gleichrichter 14 und ein anschließender Spannungsreduzierer 15 angeordnet, der eine gleichgerichtete, amplitudenmäßig zur Netzspannung U_{N} proportionale Niederspannung als Eingangsspannung U_{E} einem ersten Komparator 16 zuführt. Der Komparator 16 vergleicht die Eingangsspannung U_{E} mit einer Referenzspannung U₁ und gibt eine vom Ergebnis dieses Vergleichs abhängige Signalspannung U_{S} an eine Zeitverzögerungsschaltung 17 ab. Die Zeitverzögerungsschaltung 17 gibt eine modifizierte, insbesondere zeitverzögerte, Signalspannung U'_{S} an einen zweiten Komparator 18 ab, der die modifizierte Signalspannung U'_{S} mit einer zweiten Referenzspannung U₂ vergleicht. Der zweite Komparator 18 ist zur Ausgabe des Auslösesignals über einen Spannungsausgang 19 mit der Ansteuerschaltung 7 oder direkt mit dem Auslöser verbunden. Zum Betrieb der Komparatoren 16,18 ist der Netzüberspannungsschutz 11 über ein Netzteil mit der Betriebsspannung U₀ versorgt. Um Fehlfunktionen durch das Zusammenschalten der Ausgänge des Fehler- oder Differenzstromanalysators 6 und des Komparators 18 zu vermeiden, ist eine Entkopplung 20, z.B. in Form einer Diode, erforderlich. Die Entkopplung 20 kann alternativ an den Spannungsausgang 19 angeschlossen sein.

Das in FIG 1 dargestellte Prinzipschaltbild ist auch auf einen Fehlerstrom (FI)-Schutzschalter mit beigeordnetem Netzspannungsschutz übertragbar. In diesem Fall erfolgt die Fehlerstromauslösung netzspannungsunabhängig, der Fehler-/Differenzstromanalysator 6 arbeitet also ohne externe Spannungsversorgung. Des Weiteren entfällt bei einem FI-Schutzschalter die Ansteuerschaltung 7.

Die Referenzspannung U₁ ist im Bezug auf die Eingangsspannung U_{E} derart gewählt, dass die Eingangsspannung U_{E} die Referenzspannung U₁ dann überschreitet, wenn die Netzspannung U_{N} einen zulässigen Grenzwert überschreitet. Der Komparator 16 schaltet dabei ausgangsseitig von einem "Low"-Pegel auf einen "High"-Pegel. In der Verzögerungsschaltung 17 wird das abrupte Einsetzen der Signalspannung U_{S} insofern verzögert, als der Betrag der modifizierten Signalspannung U'_{S} nur allmählich ansteigt. Besteht die Netzüberspannung über längere Zeit, so überschreitet die modifizierte Signalspannung U'_{S} die Referenzspannung U₂ zu einem gegenüber dem Beginn der Netzüberspannung verzögerten Zeitpunkt. Dabei schaltet der zweite Komparator 18 ausgangsseitig von "Low" auf "High" und gibt die Auslösespannung U_{A} auf die Ansteuerschaltung 7, worauf der Auslöser 8 betätigt und das Kontaktsystem 10 geöffnet wird.

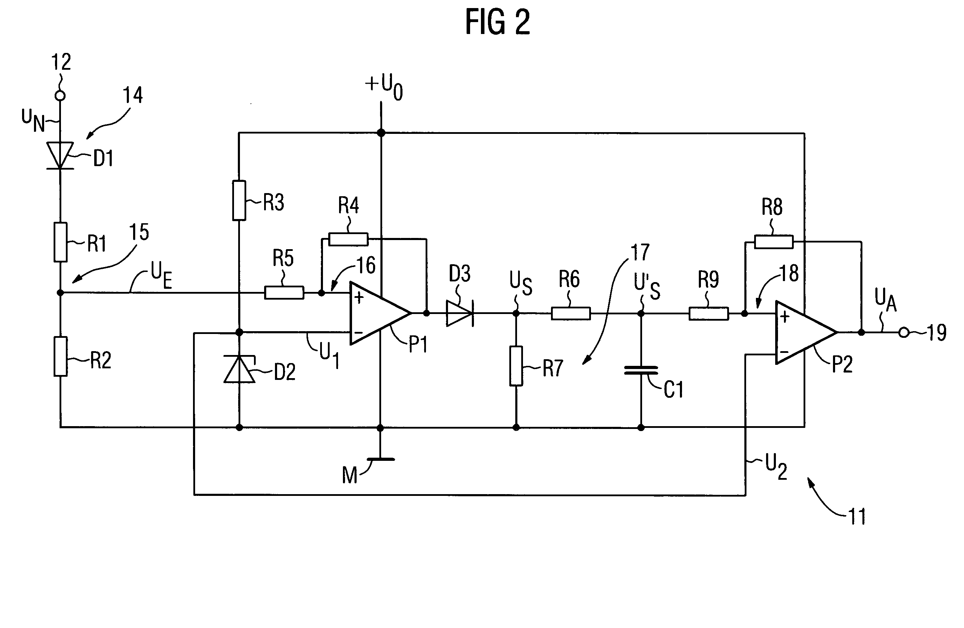

In FIG 2 ist eine schaltungstechnische Realisierung des Netzüberspannungsschutzes 11 dargestellt. Die Netzspannung U_{N} ist dabei über den Spannungseingang 12 an den Gleichrichter 14 angelegt, welcher durch eine Diode D1 realisiert ist. Der Spannungsreduzierer 15 ist als einfacher, zwei Widerstände R1,R2 umfassender Spannungsteiler ausgeführt. Dazu ist die Diode D1 ausgangsseitig über die Widerstände R1 und R2 auf Masse M gelegt. Zwischen den Widerständen R1 und R2 wird die Eingangsspannung U_{E} abgegriffen, die dem ersten Komparator 16 zugeführt wird. Der Komparator 16 ist aus einem Operationsverstärker P1, einem eingangsseitig vorgeschalteten Widerstand R5 und einem zur Bildung einer Schalthysterese zwischen den Eingang + und den Ausgang des Operationsverstärkers P1 geschalteten Widerstand R4 gebildet. Der Referenzeingangdes Operationsverstärkers P1 wird durch die positive Betriebsspannung U₀ über einen Widerstand R3 mit der durch die Z-Diode D2 bestimmten Referenzspannung U₁ beaufschlagt. Der Ausgang des Operationsverstärkers P1 ist über eine in Durchlassrichtung geschaltete Diode D3 mit der Zeitverzögerungsschaltung 17 verbunden. Die Zeitverzögerungsschaltung 17 ist durch ein RC-Glied mit einem gegen Masse M geschalteten Kondensator C1 und einem diesem eingangsseitig vorgeschalteten Ladewiderstand R6 realisiert. Weiterhin umfasst die Zeitverzögerungsschaltung 17 einen Widerstand R7, der eingangsseitig des Ladewiderstands R6 parallel zum Kondensator C1 gegen Masse M geschaltet ist, so dass die Summe R6+R7 den Entladewiderstand bildet. Die Serienschaltung der Widerstände R8 und R9 liegt parallel zu R6 + R7 und kann für den Fall R8 + R9 >> R6 + R7 vernachlässigt werden (Bemerkung: >> steht für sehr viel größer). Zwischen dem Ladewiderstand R6 und dem Kondensator C1 wird die modifizierte Signalspannung U'_{S} abgegriffen, die dem zweiten Komparator 18 zugeleitet wird. Dieser ist wie der erste Komparator 16 aus einem Operationsverstärker P2, einem Eingangswiderstand R9 und einem zwischen den Eingang + des Operationsverstärkers P2 und dessen Ausgang geschalteten Widerstand R8 gebildet. Der Referenzeingang - des Operationsverstärkers P2 ist mit dem Referenzeingang - des Operationsverstärkers P1 verbunden, so dass an beiden Operationsverstärkern P1,P2 stets dieselbe Referenzspannung U₂ = U₁ anliegt. Der Ausgang des Operationsverstärker P2 ist mit dem Spannungsausgang 19 des Netzüberspannungsschutzes 11 verbunden.

Übersteigt die Eingangsspannung U_{E} die Referenzspannung U₁, so schaltet der Operationsverstärker P1 ausgangsseitig von einer niedrigen Spannung ("Low") auf eine vergleichsweise hohe interne Signalspannung U_{S} ("High"). Ab diesem ersten Schaltzeitpunkt wird der Kondensator C1 über den Ladewiderstand R6 allmählich aufgeladen, so dass die modifizierte Signalspannung U'_{S} gegenüber der Signalspannung U_{S} nur vergleichsweise langsam ansteigt. Erreicht die modifizierte Signalspannung U'_{S} die Referenzspannung U₂, so schaltet der Operationsverstärker P2 von "Low" auf "High" und gibt dadurch das Auslösesignal in Form eines sprunghaften Spannungsanstiegs auf die Auslösespannung U_{A} über den Spannungsausgang 19 auf die Ansteuerschaltung 7. Der aus dem Netzüberspannungsschutz 11, der Ansteuerschaltung 7 und dem Auslöser 8 gebildete Netzüberspannungs-Auslösekreis ist somit wirkungsmäßig dem Fehler-/Differenzstrom-Auslösekreis parallel geschaltet. Aus Rationalitätsgründen werden die optional vorhandene Ansteuerschaltung 7 und der Auslöser 8 vom Differenzstromanalysator 6 und dem Netzüberspannungsschutz 11 gemeinsam angesprochen.

Über den Widerstand R4 wird während einer Netzüberspannung ein Teil der Signalspannung U_{S} des Operationsverstärkers P1 auf dessen Eingang + zurückgekoppelt, wodurch eine gegenüber der Eingangsspannung U_{E} erhöhte Spannung am Eingang + anliegt. Die Rückschaltung des Operationsverstärkers P1 erfolgt deshalb erst dann, wenn die Eingangsspannung U_{E} den Referenzwert U₁ deutlich unterschritten hat. Der Unterschied zwischen dem Schaltschwellwert und dem Rückschaltschwellwert, der durch die Widerstände R8,R9 in prinzipiell gleicher Weise auch für den Operationsverstärker P2 eingestellt ist, bezeichnet man als Schalthysterese.

Erfolgt bei einer transienten (= dynamischen) Netzüberspannung das Rückschalten des Operationsverstärkers P1, bevor am Operationsverstärker P2 die Schaltbedingung vorliegt, so wird der Kondensator C1 über den Widerstand R6 und den Widerstand R7 entladen. Bevorzugt ist der Widerstand R7 dabei wesentlich größer dimensioniert als der Ladewiderstand R6, so dass der Entladewiderstand (R6+R7) in Parallelschaltung mit (R8+R9) mindestens 10-fach größer ist als der Ladewiderstand R6. Der Kondensator C1 wird in dieser Dimensionierung des RC-Glieds bei einer statischen Netzüberspannung kumulativ aufgeladen. Eine schnelle Entladung des Kondensators C1 über den Widerstand R6 und dem Ausgang des Komparators 16 ist dabei durch die Diode D3 verhindert.

Tritt andererseits nur ein vereinzelter, kurzer Netzüberspannungsstoß auf, so stellen die Widerstände R6 und R7 sicher, dass der Kondensator C1 stets vollständig entladen ist.

## Patentansprüche

1. Netzüberspannungsschutz (11) mit einem zum Anschluss an eine spannungsführende Netzleitung (L,N) vorgesehenen Spannungseingang (12), und mit einem Spannungsausgang (19) zur Ausgabe eines Auslösesignals (U_{A}) an eine die Netzleitungen (L,N) schaltende Auslösevorrichtung (7,8,9,10), **gekennzeichnet durch** einen ersten Komparator (16), der eine interne Signalspannung (U_{S}) ausgibt, wenn die Netzspannung (U_{N}) einen zulässigen Grenzwert überschreitet, eine dem ersten Komparator (16) nachgeschaltete Zeitverzögerungsschaltung (17), die eine modifizierte Signalspannung (U'_{S}) ausgibt, und einen zweiten Komparator (18), der zur Erzeugung des Auslösesignals eine Auslösespannung (U_{A}) ausgibt, wenn die modifizierte Signalspannung (U'_{S}) einen Referenzwert (U₂) überschreitet.

2. Netzüberspannungsschutz nach Anspruch 1, **dadurch gekennzeichnet, dass** die Zeitverzögerungsschaltung (17) ein RC-Glied (C1,R6,R7) umfasst.

3. Netzüberspannungschutz nach einem der Ansprüche 1 oder 2, **dadurch gekennzeichnet, dass** die Zeitverzögerungsschaltung (17) eine Ladezeitkonstante und eine Entladezeitkonstante aufweist, wobei die Entladezeitkonstante wesentlich größer ist als die Ladezeitkonstante.

4. Netzüberspannungsschutz nach einem der Ansprüche 1 bis 3, **dadurch gekennzeichnet, dass** der erste Komparator (16) mit einer Schalthysterese ausgestattet ist.

5. Netzüberspannungsschutz nach einem der Ansprüche 1 bis 4, **gekennzeichnet durch** eine dem ersten Komparator (16) vorgeschaltete, einen Gleichrichter (14) beinhaltende Signalaufbereitungsschaltung (13).

6. Netzüberspannungsschutz nach Anspruch 1 bis 5, **gekennzeichnet durch** eine dem ersten Komparator (16) vorgeschaltete, einen Spannungsreduzierer (15) beinhaltende Signalaufbereitungsschaltung (13).

7. Netzüberspannungsschutz nach Anspruch 5, **dadurch gekennzeichnet, dass** der Gleichrichter (14) durch eine Diode (D1) ausgeführt ist.

8. Netzüberspannungsschutz nach Anspruch 6, **dadurch gekennzeichnet, dass** der Netzspannungsreduzierer (15) durch einen Spannungsteiler (R1,R2) realisiert ist.

9. Schutzschaltgerät mit einem einem Differenzstrom/Fehlerstrom-Auslösekreis (6,7,8) parallel geschalteten Überspannungs-Auslösekreis (11,7,8) nach einem der Ansprüche 1 bis 8.
